# DEMANDE DE BREVET EUROPEEN

(11) **EP 3 769 892 A1**
(43) Date de publication de la demande: **27.01.2021**
(21) Numéro de dépôt: 20185551.7
(22) Date de dépôt: 13.07.2020
(51) Int. Cl.: B23K 11/11, B23K 11/25, B23K 11/28, B23K 11/31

(54) **APPAREIL DE SOUDAGE COMPORTANT UN BRAS AMOVIBLE DOTÉ D'UNE PARTIE MOBILE EN ROTATION SUPPORTANT UNE ÉLECTRODE**

(30) Priorité: 24.07.2019 FR 1908407
(71) Demandeur: GYS, 53940 Saint-Berthevin (FR)
(72) Inventeur: BOUYGUES, Bruno, 75016 PARIS (FR); GABILLARD, Mickaël, 53970 MONTIGNE-LE-BRILLANT (FR)
(74) Mandataire: Vidon Brevets & Stratégie

(57) **Abrégé**

L'invention concerne un appareil de soudage par résistances comportant une pince (1) destinée à supporter un bras amovible, le dit bras étant constitué d'une partie fixe supportant une électrode fixe (6) et d'une partie mobile en rotation supportant une électrode mobile (7), les électrodes étant destinées à être parcoures par un courant électrique. Le bras mobile de la pince est poussé dans son mouvement de rotation par un vérin pour que les extrémités des électrodes se rapprochent et serrent les éléments à souder, la pince comportant en outre un capteur de mesure de déplacement dont la mesure est proportionnelle à la distance entre les extrémités des électrodes. De cette manière, il est facile de mesurer l'écart entre les électrodes et la mesure réalisée sur le piston est utilisable pour d'autres types de bras.

## Description

### Domaine de l'invention

L'invention concerne un appareil de soudage par résistance comportant une pince destinée à supporter un bras amovible. L'invention concerne plus particulièrement le fait que le dit bras est constitué d'une partie fixe supportant une électrode fixe et d'une partie mobile en rotation supportant une électrode mobile.

### Art antérieur et ses inconvénients

Le domaine de l'invention est celui des appareils de soudage par résistance. Ces appareils disposent d'un moyen de génération de très forts courants électrique qui sont transmis à travers deux électrodes serrant entre eux les matériaux à souder. Compte tenu de la plus grande résistance électrique des matériaux que celle des électrodes, le passage du courant vient chauffer les matériaux et le soudage s'effectue. Le bloc supportant les électrodes s'appelle une pince. Ces appareils disposent avantageusement de plusieurs jeux de pinces pour s'adapter à l'épaisseur des matériaux ainsi que la place disponible pour loger les électrodes lors du soudage.

Il est connu des appareils de soudage par point doté d'un bloc comportant une pince avec un bras en forme de « C » renversé se terminant par une première électrode et une autre électrode mobile en translation au sein du bloc. Les appareils actuels possèdent deux vérins pour contrôler le déplacement en avant et arrière de l'électrode du bloc pour fermer et ouvrir la pince. Il est connu également d'utiliser un mouvement en rotation des électrodes, à la façon d'une paire de ciseaux. L'invention porte plus spécifiquement sur un ensemble de deux bras et d'une pince permettant d'utiliser aussi bien des bras en forme de « C » que des bras ayant un mouvement de ciseaux.

Le système mécanique comporte un actionneur pneumatique qui imprime un mouvement linéaire à une électrode pince, des contacts électriques conçus pour faire passer de très forts courants (de 1 000 A à 15 000 Ampères par exemple), d'une connectique hydraulique automatique pour le système de refroidissement par eau, d'un montage mécanique permettant de convertir le mouvement linéaire en un mouvement de rotation, d'un montage mécanique permettant de bloquer puis de débloquer l'électrode mobile du vérin par un simple appui sur un bouton.

Les appareils actuels possèdent des moyens de verrouillage compliqués et longs à mettre en œuvre. Ils nécessitent l'utilisation d'outils spécifique pour le montage et le démontage, voire même la mobilisation de deux personnes.

Les appareils actuels sont généralement équipés de deux vérins pour l'ouverture et la fermeture des électrodes, ce qui multiplie les équipements et augmente les risques de pannes et le coût de fabrication de l'appareil.

### Objectifs de l'invention

La présente invention propose un appareil de soudage doté d'un bras à mouvement en ciseau pour pince de soudage par points à mouvement en « C ». Cet appareil dispose d'un mécanisme permettant de convertir un mouvement linéaire d'une électrode pince en un mouvement rotatif du bras mobile. De plus, l'appareil proposé bénéficie d'un autre mécanisme permettant de verrouiller automatiquement l'électrode mobile sur l'électrode pince et ainsi solidariser les deux éléments de façon qu'un déplacement déterminé de l'électrode pince provoque une rotation d'un angle déterminé de l'électrode mobile.

### Exposé de l'invention

A cet effet, l'invention concerne un appareil de soudage par résistance comportant une pince destinée à supporter un bras amovible, le dit bras étant constitué d'une partie fixe supportant une électrode fixe et d'une partie mobile en rotation supportant une électrode mobile, les électrodes étant destinées à être parcoures par un courant électrique. Le bras mobile de la pince est poussé dans son mouvement de rotation par un vérin pour que les extrémités des électrodes se rapprochent et serrent les éléments à souder, la pince comportant en outre un capteur de mesure de déplacement dont la mesure est proportionnelle à la distance entre les extrémités des électrodes.

De cette manière, il est facile de mesurer l'écart entre les électrodes et la mesure réalisée sur le piston est utilisable pour d'autres types de bras.

La mesure de la distance entre les deux électrodes permet de déduire l'épaisseur des éléments à souder, tels des tôles, ce qui permet de déterminer les paramètres de soudage à appliquer de manière automatique.

Selon un premier mode de réalisation, l'appareil de soudage par résistance comporte un coulisseau doté d'un cylindre poussé en translation par la tête du vérin, ledit cylindre comportant deux bagues diamétralement opposées se logeant dans des trous oblongs situés de chaque coté des flancs du bras mobile pour assurer le dégauchi angulaire du coulisseau lors du déplacement de la tête du piston.

Selon un autre mode de réalisation, l'appareil de soudage par résistance comporte un mécanisme de verrouillage du bras pour le fixer sur la pince, ce mécanisme comportant un verrou comportant un loquet venant se clipser dans une gorge.

Selon un autre mode de réalisation, le verrouillage du bras consiste à le déplacer vers le bas pour engager une pièce de blocage dans une gorge, puis à tourner une manette pour verrouiller le bras.

Selon un autre mode de réalisation, la pince est conçue pour supporter également un bras en C constitué d'une partie fixe supportant une électrode fixe et d'une partie mobile en translation supportant une électrode mobile, le vérin animant directement le mouvement de l'électrode mobile.

Selon un autre mode de réalisation, la chambre du vérin est mise en surpression pour rapprocher les électrodes et en dépression pour les éloigner, la pression du fluide pneumatique actionnant le vérin de la pince étant contrôlée par deux électrovannes qui, ouvertes, génèrent un effet venturi sur les canalisations et une pression inférieure à celle atmosphérique, cette pression étant transmise au bloc pince par une durite.

Selon un autre mode de réalisation, le mécanisme de blocage du bras comporte deux pièces en laiton assurant le blocage mécanique, la continuité électrique et le passage de l'eau de refroidissement, les deux pièces se solidarisant par deux queues d'aronde formant un V.

Selon un autre mode de réalisation, le bras se fixe par un mouvement pivotant autour d'un axe passant par deux picots, puis par un mouvement de translation permettant à la structure male en forme de « V » de la queue d'aronde qui est fixé au bras de se glisser dans une structure femelle en forme de « V » de la queue d'aronde qui est fixé au bloc de la pince.

### Liste des figures

D'autres caractéristiques et avantages de l'invention apparaîtront maintenant avec plus de détails dans le cadre de la description qui suit d'exemples de réalisation donnés à titre illustratif et non-limitatif en se référant aux figures annexées qui représentent :
**[****fig. 1****] :** la figure 1 présente un ensemble bras et pince doté de deux électrodes de soudage selon un exemple de réalisation;
**[****fig. 2****] :** la figure 1 présente un schéma du même ensemble bras et pince que la figure précédente avec la pince ouverte;
**[****fig. 3****] :** la figure 3 présente en médaillon la tige du vérin au début de sa fixation avec le bras mobile;
**[****fig. 4****] :** la figure 4 présente en médaillon la tige du vérin coulissant dans la fenêtre circulaire peu de temps après le moment décrit par la figure précédente;
**[****fig. 5****] :** la figure 5 présente en médaillon le loquet dans sa position de verrouillage du bras mobile avec la tige du vérin;
**[****fig. 6****] :** la figure 6 présente un sous-ensemble coulisseau du bras permettant de serrer l'allonge de la pince;
**[****fig. 7****] :** la figure 7 présente la position du bloc de bras avant son insertion sur la pince, selon un exemple préféré de réalisation;
**[****fig. 8****] :** la figure 8 présente la façon dont l'électrode de la pince et le bras s'accouplent, en réalisant un bon contact électrique;
**[****fig. 9****] :** la figure 9 montre la partie male et la partie femelle formant la fixation en queue d'aronde de la fixation du bloc de deux bras sur la pince;
**[****fig. 10****] :** la figure 10 présente dans un médaillon les éléments permettant le verrouillage du bras; **[****fig. 11****] :** la figure 11 présente en médaillon une autre vue du mécanisme dans une position de déverrouillage;
**[****fig. 12****] :** la figure 12 présente la position du bloc de bras au moment de sa mise en contact avec la pince;
**[****fig. 13****] :** la figure 13 représente la position du bloc de deux bras après rotation;
**[****fig. 14****] :** la figure 14 présente la position du bloc de deux bras avec la manette de blocage baissée; **[****fig. 15****] :** la figure 15 présente l'ensemble bras et pince avec la tige du vérin solidarisée avec le bras mobile.

### Description détaillée de modes de réalisation de l'invention

### Principe général

L'invention concerne un appareil de soudage par résistance comportant une pince destinée à supporter un bras amovible, le dit bras étant constitué d'une partie fixe supportant une électrode fixe et d'une partie mobile en rotation supportant une électrode mobile, les électrodes étant destinées à être parcoures par un courant électrique. Le bras mobile de la pince est poussé dans son mouvement de rotation par un vérin pour que les extrémités des électrodes se rapprochent et serrent les éléments à souder, la pince comportant en outre un capteur de mesure de déplacement dont la mesure est proportionnelle à la distance entre les extrémités des électrodes. La mesure de la distance entre les deux électrodes permet de déduire l'épaisseur des éléments à souder, tels des tôles, ce qui permet de déterminer les paramètres de soudage à appliquer de manière automatique.

### Description d'un mode de réalisation

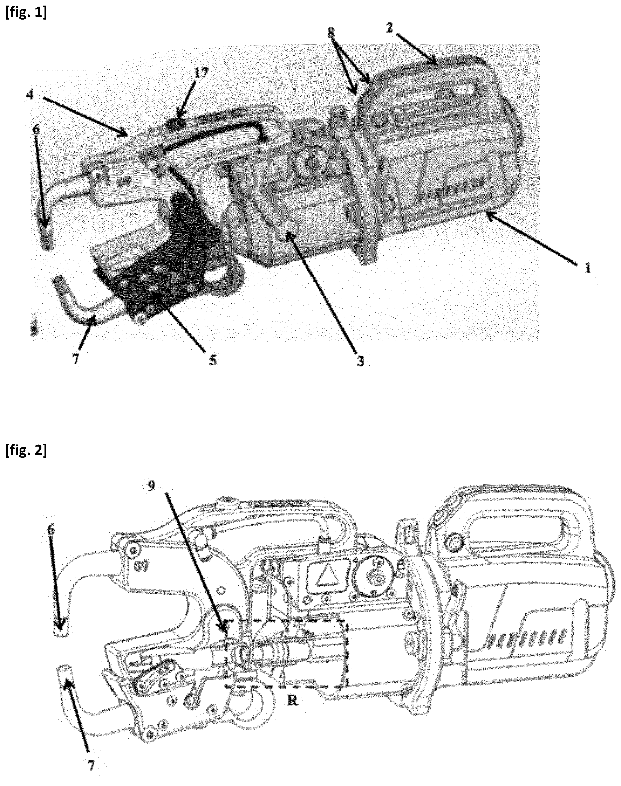

La **Fig. 1** présente un ensemble bras et pince doté de deux électrodes de soudage selon un exemple préféré de réalisation. La pince 1 dispose de moyen de préhension et de manipulation tel qu'une poignée supérieure 2 et une poignée latérale 3, éventuellement amovible. La pince 1 se prolonge vers l'avant par un bras fixe 4, de préférence situé au-dessus d'un bras mobile 5. Le bras fixe 4 se termine par une électrode fixe 6 et le bras mobile se termine par une électrode mobile 7. L'ensemble bras et pince peut être tenu par un opérateur, ou fixé à l'extrémité d'un bras robot. Des boutons de commande 8 sont placés à proximité de la poignée 2 pour permettre à l'opérateur d'ouvrir et de fermer la pince.

La **Fig. 2** présente un schéma du même ensemble bras et pince que la figure précédente avec la pince ouverte montrant des éléments internes. Les électrodes 6 et 7 sont ouvertes permettant d'insérer entre elles les éléments métalliques à souder. La rotation du bras mobile 7 autour d'un axe 9 permet d'ouvrir les électrodes selon une distance qui dépend de l'angle de rotation. L'ensemble des deux bras est solidarisé avec la pince par un mécanisme de blocage qui sera décrit ultérieurement.

Une fois les deux bras solidarisés avec la pince, l'opérateur appuie sur un bouton 8 pour faire avancer la tige du vérin et permettre sa solidarisation avec le bras mobile selon un mécanisme qui va être maintenant explicité. Les médaillons des figures suivantes présentent un focus sur la zone encadrée sur la **Fig. 2**, lorsque la tige du vérin avance.

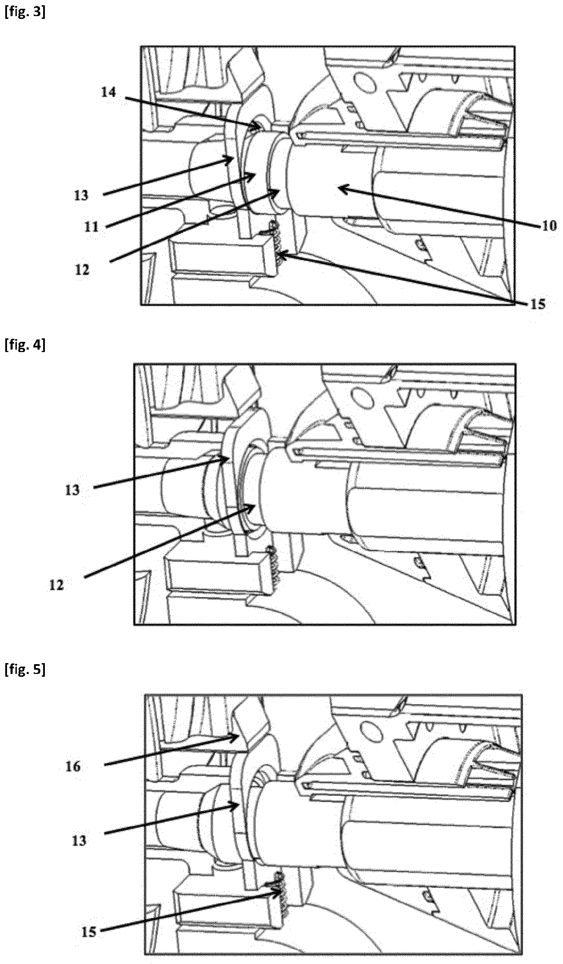

La **Fig. 3** présente en médaillon la tige du vérin au début de sa fixation avec le bras mobile. La tête de tige 10 possède un chanfrein puis une section circulaire 11 se poursuivant dans la direction opposée aux électrodes par une gorge annulaire 12 à flanc droit. La tête de la tige 10 s'insère dans une fenêtre circulaire 13 pratiquée dans un loquet vertical 14 et s'introduit dans l'extrémité de l'électrode mobile qui se présente sous la forme d'une surface conique. Les angles du cône et du chanfrein se complètent de façon à réaliser un bon contact électrique. La dimension verticale de la fenêtre est plus importante que sa dimension horizontale et, son flanc est également chanfreiné. Le loquet 14 se déplace verticalement dans des rainures solidarisées avec le bras mobile. Un ressort 15 en partie basse exerce une pression sur le loquet pour le faire monter.

Au début de l'introduction de la tête de la tige dans la fenêtre, les chanfreins de la fenêtre circulaire 13 et de la tête de la tige sont en contact et exercent une pression vers le bas sur le loquet qui s'abaisse en affleurant la surface inférieure de la tige du vérin. Le ressort 15 se comprime alors.

Selon l'invention, le déplacement de l'électrode mobile s'effectue par les mouvements d'avant et arrière d'un seul vérin, mis alternativement en pression et en dépression et contrôlé par les boutons 8. La chambre du vérin est conçue pour être en surpression pour rapprocher les électrodes et en dépression pour les éloigner, la pression du fluide pneumatique actionnant le vérin de la pince étant contrôlée par deux électrovannes qui, dans une position ouverte, génèrent un effet venturi sur les canalisations et une pression inférieure à celle atmosphérique, cette pression étant transmise au bloc pince par une durite. Les électrodes sont en contact lorsque la chambre du vérin est en surpression. De cette manière, un seul vérin est nécessaire pour faire avancer ou reculer la tige, et donc pour ouvrir et refermer les électrodes.

La **Fig. 4** présente en médaillon la tige du vérin coulissant dans la fenêtre circulaire peu de temps après le moment décrit par la figure précédente. La tige du vérin continue à avancer et le loquet se situe maintenant à la hauteur de la section circulaire 11. Le ressort 15 est alors dans sa position maximale de compression.

La **Fig. 5** présente en médaillon le loquet dans sa position de verrouillage du bras mobile avec la tige du vérin. Dans son avancement, la tige du vérin fait passer le loquet 14 par-dessus toute la section circulaire 11 et l'arête de la fenêtre se trouve alors au niveau de la gorge annulaire 12. La pression du ressort repousse vers le haut le loquet, sa surface étant de ce fait en contact avec le flanc droit de la gorge annulaire 12. L'épaisseur du loquet étant avantageusement quasi identique à la largeur de la gorge annulaire, le premier est alors solidement verrouillé avec le second. Tout mouvement de la tige du vérin entraîne un déplacement dans la même direction du loquet et donc du bras mobile 5. De ce fait, un mouvement en avant de la tige du vérin déclenche une rotation du bras mobile autour de l'axe 9 et un rapprochement des électrodes. La distance entre les électrodes augmente proportionnellement avec le déplacement vers l'arrière de la tige du vérin.

Un capteur est monté sur la tige du vérin afin de mesurer son déplacement, ce capteur produit de ce fait une valeur représentative et proportionnelle à la distance entre les deux électrodes. La valeur du capteur est éventuellement visualisable sur un écran, et peut aussi être enregistrée comme paramètre historique de la soudure réalisée. La valeur du capteur est également utilisable pour réaliser un asservissement de la position respective des électrodes avant de démarrer un cycle de soudage. Le capteur de mesure est par exemple un potentiomètre linéaire qui suit les mouvements de la tige du vérin.

Le ressort comprimé dans cette position maintient le verrouillage entre la tête de la tige et le bras mobile. Pour déverrouiller, il suffit alors de rabaisser le loquet et de repousser la tige du vérin vers l'arrière. Ce mouvement s'effectue à l'aide d'une tige verticale se terminant par une pièce en équerre 16 qui vient exercer une pression sur le loquet, pour libérer ainsi le mécanisme de verrouillage. La tige verticale passe à travers toute la hauteur de l'ensemble des deux bras et ressort sur la surface supérieure par un plot 17 visible sur la **Fig. 1****.** Lors du démontage, l'opérateur appuie sur ce plot et sur le bouton permettant de commander la tige du vérin en marche arrière.

L'ensemble bras et pince décrit ci-dessus présente l'avantage d'utiliser des blocs formés par les deux bras sur de nombreux types de machine. Le bloc des deux bras est solidarisé avec la pince par un seul mécanisme de blocage situé au-dessus de la poignée 3. De cette manière, il est possible d'utiliser la même pince avec un bloc formé d'électrodes en forme de « C », dont les deux branches terminales possèdent des extrémités qui se retournent l'une vers l'autre et se font face. La longueur de la branche intermédiaire définissant la distance entre les électrodes, correspond à la longueur de la tige du vérin. Dans une telle machine, il n'y a pas de pièces en rotation, la distance entre les extrémités des électrodes dépend directement de la distance parcourue par la tige du vérin. La présente invention permet d'utiliser indifféremment sur une même pince, des bras en « C » ou des bras pivotants.

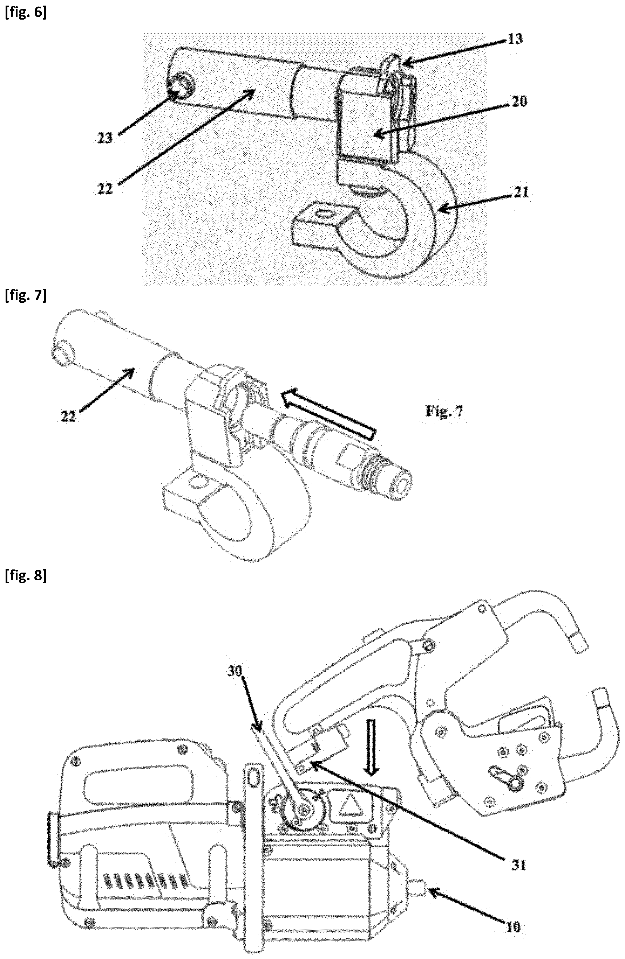

La **Fig. 6** présente un sous-ensemble coulisseau du bras permettant de serrer l'allonge de la pince.

Ce sous ensemble est composé d'une première pièce en cuivre 20, qui comporte la fonction de verrouillage avec le loquet 13 se déplaçant verticalement. Lors du serrage, l'allonge de la pince et cette pièce en cuivre 20 sont en contact au niveau de la partie conique qui assure un bon passage du courant lors du soudage. Le courant passe ensuite par la liaison souple 21 qui est réalisée par une pièce en forme de cercle ouvert (les trois quarts d'un cercle dans le cas de la **Fig. 6**). Cette pièce constitue un shunt électrique multi-lamelles. Le cercle étant ouvert, il se déforme facilement pour suivre le mouvement de conversion du mouvement linéaire de la tige du vérin en un mouvement de rotation du bras mobile. La pièce en cuivre 20 est connectée à la noix de la mâchoire mobile et du bras mobile.

Le sous-ensemble représenté à la **Fig. 6** est isolé électriquement du reste du bras. La partie guidage pour le déplacement rectiligne est assurée par un cylindre 22 en matière plastique qui assure l'isolation électrique. Le sous-ensemble comporte également deux bagues 23, placées dans des positions diamétralement opposées sur la surface du cylindre 22. Ces bagues se logent dans des trous oblongs situés de chaque coté des flancs du bras mobile et assurent le dégauchi angulaire du sous-ensemble coulisseau.

La **Fig. 7** présente la façon dont l'électrode de la pince et le bras s'accouplent, en réalisant un bon contact électrique. Le mouvement de l'électrode de la pince dans un cylindre 22 est représenté par une flèche.

La **Fig. 8** présente la position du bloc de bras avant son insertion sur la pince 1, selon un exemple préféré de réalisation. Le bloc de bras est muni d'une manette de blocage 30 qui est présentée sur la figure basculée en arrière. La **Fig. 8** montre également la tête du vérin 10. Le mécanisme de solidarisation comporte une lèvre 31 s'étendant en partie basse et vers l'arrière du bloc de bras. Dans un premier temps, le bloc est abaissé comme le montre la flèche et la lèvre se présence à l'entrée d'une gorge s'étendant horizontalement avec l'axe de la pince 1.

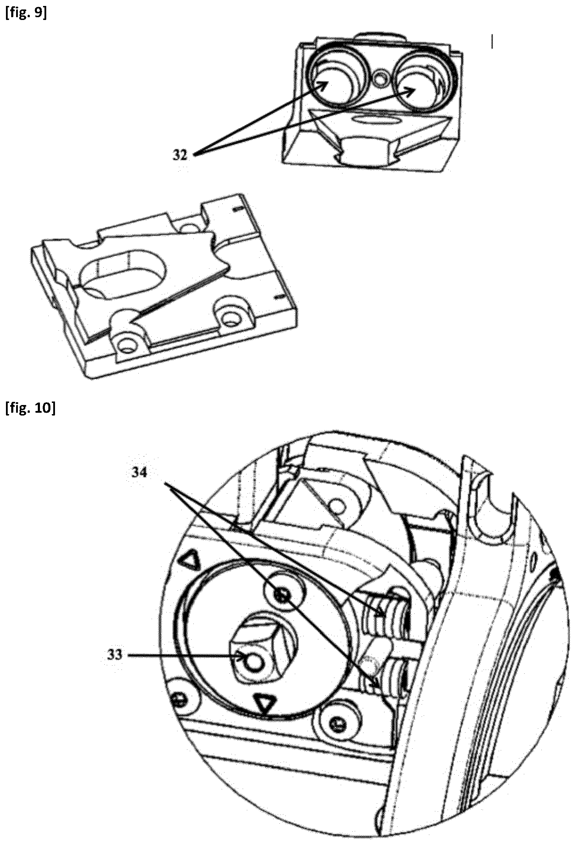

La **Fig. 9** montre la partie male et la partie femelle formant la fixation en queue d'aronde de la fixation du bloc de deux bras sur la pince, ces deux pièces étant avantageusement en laiton. Les deux trous cylindriques 32 correspondent aux orifices de connexion pour raccorder les durites transportant le liquide de refroidissement.

La **Fig. 10** présente dans un médaillon les éléments permettant le verrouillage du bras. Le mouvement de la manette de blocage (qui a été enlevée sur l'image, et se fixe sur l'axe carré 33) provoque la rotation de deux cames reliées par une pièce intermédiaire. Une goupille est en contact sur le profil excentré réalisé dans la came.

Avant le verrouillage, des ressorts 34 repoussent des bagues qui ferment alors les clapets commandant le passage du liquide de refroidissement (typiquement de l'eau). Le passage d'eau est alors fermé, l'étanchéité étant assurée par des joints toriques, à l'intérieur et à l'extérieur de la bague.

Lors de la phase de verrouillage, les cames sont mises en rotation par la manette, et poussent les goupilles du socle de bras vers l'avant. En bout de courses, les deux cames se déplacent vers l'arrière, et viennent comprimer les ressorts 34 qui exercent un effort élevé. La pression de serrage est assurée par un patin en contact sur l'extérieur des cames.

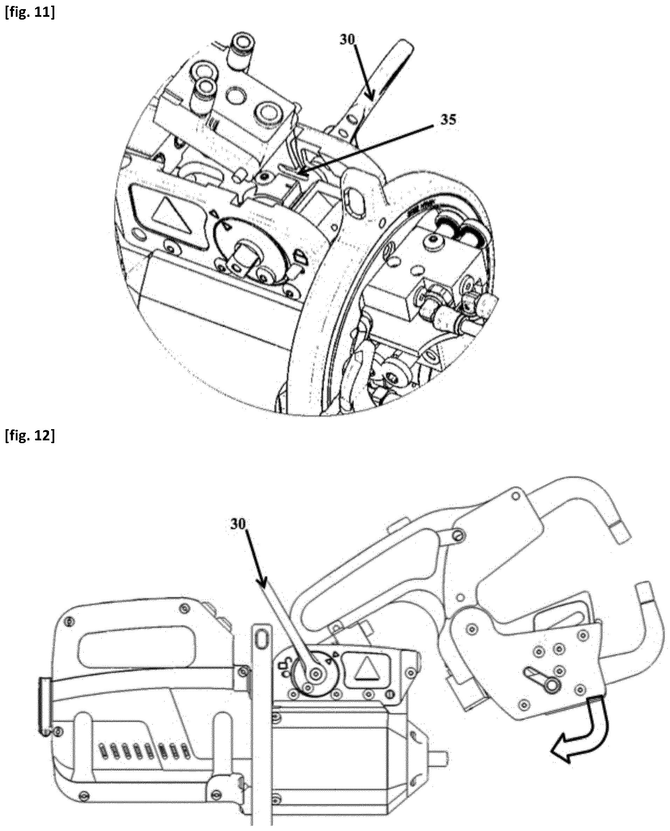

La **Fig. 11** présente en médaillon une autre vue du mécanisme dans une position de déverrouillage.

Lors de déverrouillage, une forme 35 guide la goupille lors de la mise en place du socle, et la force à descendre dans une position basse. A la fin de la phase de verrouillage, la goupille est complétement descendue. Les connecteurs du socle poussent alors les bagues, ce qui comprime les ressorts 34 et ouvre les clapets. Le passage du liquide de refroidissement est alors ouvert.

La **Fig. 12** présente la position du bloc de bras au moment de sa mise en contact avec la pince. L'opérateur effectue maintenant un mouvement de rotation comme le montre la flèche sur la **Fig. 12**, pour abaisser l'avant des électrodes et ainsi positionner le bloc de bras horizontalement.

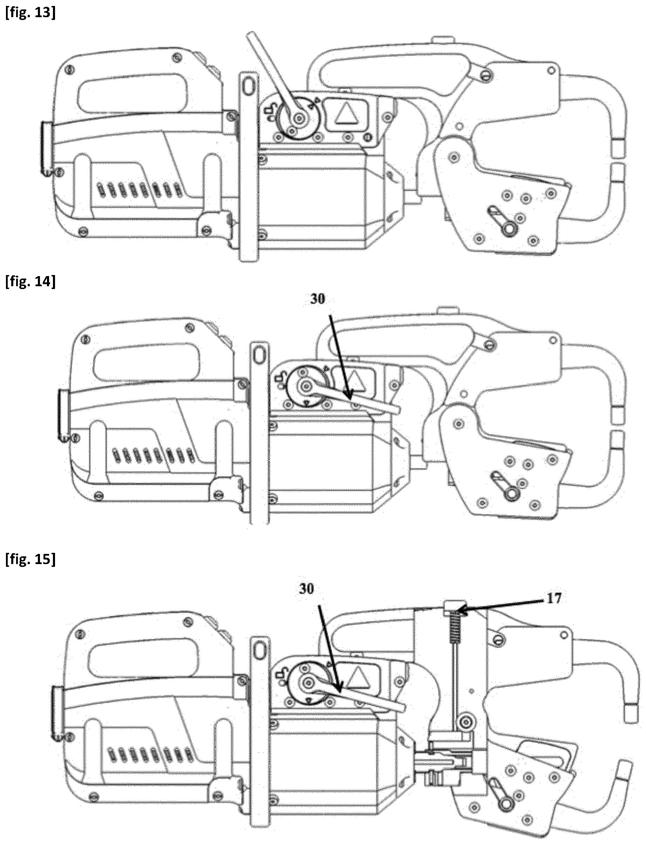

La **Fig. 13** présente la position du bloc de deux bras lorsqu'il est en position horizontale. L'opérateur effectue ensuite un déplacement rectiligne en arrière pour insérer l'élément mâle de la fixation en queue d'aronde, dans l'élément femelle. La **Fig. 13** représente la position après ce déplacement rectiligne.

La **Fig. 14** présente la position du bloc de deux bras avec la manette de blocage 30 baissée garantissant ainsi une bonne solidarisation du bloc avec la pince. La manette 30 baissée exerce une force constante sur le mécanisme qui est suffisamment rigide pour ne pas se déformer sous la pression du vérin.

La **Fig. 15** présente l'ensemble bras et pince avec la tige du vérin solidarisée avec le bras mobile. La solidarisation s'est déroulée de la manière décrite précédemment, en regard des **Fig. 3, 4** et **5****.** La **Fig. 15** montre la tige verticale se terminant par la pièce en équerre qui exerce une pression sur le loquet pour libérer le bras mobile. Le plot 17 au-dessus de la tige verticale est visible sur la figure. Le vérin étant repoussé vers l'arrière, les électrodes se présentent avec l'écartement maximal.

La désolidarisation du bloc de deux bras s'effectue par un mouvement inverse. Dans un premier temps, l'opérateur appuie sur le plot 17 pour libérer la tête de la tige du vérin. La pression sur le bouton du bas 8 de la pince fait se rétracter l'électrode et l'extrait du bras. Puis, l'opérateur bascule en arrière la manette 30 pour libérer la pression sur le mécanisme de verrouillage. Le bloc de deux bras peut alors être retiré, d'abord en exerçant un mouvement linéaire horizontal vers l'arrière, puis selon un mouvement de rotation en faisant pivoter vers le haut l'avant du bloc. Se faisant le bloc peut être emmené par un mouvement vers le haut.

Une telle solidarisation permet à la fois d'assurer les connexions électriques mais aussi les connexions hydrauliques. Des tuyaux permettent en effet l'amenée et le retour d'un fluide caloporteur à l'intérieur des masses métalliques des électrodes.

La présente invention décrit un ensemble de bras et d'une pince, chacun de ces éléments constitue un élément essentiel à l'invention qui est de ce fait couvert par la présente demande. Bien que la présente invention ait été décrite en référence aux modes de réalisation particuliers illustrés, celle-ci n'est nullement limitée par ces modes de réalisation, mais ne l'est que par les revendications annexées. On notera que des changements ou des modifications pourront être apportés par l'homme du métier.

## Revendications

1. Appareil de soudage par résistance comportant une pince (1) destinée à supporter un bras amovible, le dit bras étant constitué d'une partie fixe supportant une électrode fixe (6) et d'une partie mobile en rotation supportant une électrode mobile (7), les électrodes étant destinées à être parcoures par un courant électrique, **caractérisé en ce que** le bras mobile de la pince est poussé dans son mouvement de rotation par un vérin pour que les extrémités des électrodes se rapprochent et serrent les éléments à souder, la pince comportant en outre un capteur de mesure de déplacement dont la mesure est proportionnelle à la distance entre les extrémités des électrodes.

2. Appareil de soudage par résistance selon la revendication 1, **caractérisé en ce qu'**il comporte un coulisseau doté d'un cylindre (22) poussé en translation par la tête du vérin, ledit cylindre comportant deux bagues (23) diamétralement opposées se logeant dans des trous oblongs situés de chaque coté des flancs du bras mobile pour assurer le dégauchi angulaire du coulisseau lors du déplacement de la tête du piston.

3. Appareil de soudage par résistance selon la revendication 1 ou 2, **caractérisé en ce qu'**il comporte un mécanisme de verrouillage du bras pour le fixer sur la pince, ce mécanisme comportant un verrou comportant un loquet venant se clipser dans une gorge.

4. Appareil de soudage par résistance selon la revendication 3, **caractérisé en ce que** le verrouillage du bras consiste à le déplacer vers le bas pour engager une pièce de blocage dans une gorge, puis à tourner une manette pour verrouiller le bras.

5. Appareil de soudage par résistance selon l'une quelconque des revendications précédentes, **caractérisé en ce que** la pince est conçue pour supporter également un bras en C constitué d'une partie fixe supportant une électrode fixe et d'une partie mobile en translation supportant une électrode mobile, le vérin animant directement le mouvement de l'électrode mobile.

6. Appareil de soudage par résistance selon l'une quelconque des revendications précédentes, **caractérisé en ce que** la chambre du vérin est mise en surpression pour rapprocher les électrodes et en dépression pour les éloigner, la pression du fluide pneumatique actionnant le vérin de la pince étant contrôlée par deux électrovannes qui, ouvertes, génèrent un effet venturi sur les canalisations et une pression inférieure à celle atmosphérique, cette pression étant transmise au bloc pince par une durite.

7. Appareil de soudage par résistance selon l'une quelconque des revendications précédentes, **caractérisé en ce que** le mécanisme de blocage du bras comporte deux pièces en laiton assurant le blocage mécanique, la continuité électrique et le passage de l'eau de refroidissement, les deux pièces se solidarisant par deux queues d'aronde formant un « V ».

8. Appareil de soudage par résistance selon la revendication 7, **caractérisé en ce que** le bras se fixe par un mouvement pivotant autour d'un axe passant par deux picots, puis par un mouvement de translation permettant à la structure male en forme de « V » de la queue d'aronde qui est fixé au bras de se glisser dans une structure femelle en forme de « V » de la queue d'aronde qui est fixé au bloc de la pince.
